# EUROPEAN PATENT APPLICATION

(11) **EP 2 153 743 A1**
(43) Date of publication of application: **17.02.2010**
(21) Application number: 08741814.1
(22) Date of filing: 13.03.2008
(51) Int. Cl.: A45C 5/14, B62B 5/02

(54) **CABIN BAGGAGE CARRYING DEVICE**

(30) Priority: 16.03.2007 RU 2007109678
(71) Applicant: Minaker, Victor Yefimovich, Moscow 119049 (RU); Bykhovskiy, Mikhail Victorovich, Moscow 119049 (RU)
(72) Inventor: Minaker, Victor Yefimovich, Moscow 119049 (RU); Bykhovskiy, Mikhail Victorovich, Moscow 119049 (RU)
(74) Representative: Sarap, Margus
(86) International application number: PCT/RU2008/000143
(87) International publication number: WO 2008/115095

(57) **Abstract**

The invention relates to devices for carrying in a tilt position a hand luggage in a container provided with wheels and handle (suitcases, bags etc.). The technical result that could be obtained as a consequence of the claimed invention use consists in reducing a force, as well as in reducing the non-uniformity of the force which is necessary to be applied for carrying a hand luggage upstairs/downstairs, particularly when a staircase has non-rounded step edges, as well as, specifically, in reducing the resistance resulting therefrom. The technical result is achieved by means of using a device for carrying in a tilt position a hand luggage by means of applying a force thereto, which force moving and supporting in that position the hand luggage including a container, main and additional wheels mounted on axles, a means for fastening the axles to the container, and at least one handle having at least one handhold and configured for altering, relative to the horizontal, a container tilt angle value and for altering, relative to the container, a position of the force application in the direction opposite to the direction of altering the container tilt angle relative to the main wheels, wherein at least one handle being configured for fixing said position, and wherein the additional wheels being placed in such a way, that the ratio of the distance between the geometrical axes of the additional wheels nearest longitudinally each other to the diameter of the additional wheels being selected within the range of 0.2 to 0.56.

## Description

### TECHNICAL FIELD

The invention relates to the devices for carrying in a tilt position a hand luggage in a container provided with wheels and handle (suitcases, bags etc.).

### BACKGROUND ART

Known is a device for carrying, particularly in a tilt position, a hand luggage by means of applying a force thereto, which force moving and supporting in that position the hand luggage including a container and wheels, as well as a handle (US 3.163.268, Int.Cl. A45C 5/00, A45C 5/14; 12.29.1964).

The disadvantage of the known device consists in the inconvenience of moving thereof upstairs/downstairs. This inconvenience manifests itself, particularly, as a great force needed for application for lifting and carrying the device upstairs/downstairs.

The closest to the claimed solution is a device for carrying in a tilt position a hand luggage by means of applying a force thereto, which force carrying and supporting in that position the hand luggage made in the form of a suitcase including a container, main and additional wheels mounted rotatably on axles, a means for fastening axles to the container, and a handle having a handhold and configured for altering, relative to the horizontal, a container tilt angle value and for altering, relative to the container, a position of force application in the direction opposite to the direction of altering the container tilt angle value relative to the main wheels (US 2004/0094378 A, Int.Cl. A54C 5/14, 20.05.2004).

The disadvantage of the known device consists in the inconvenience of moving thereof upstairs/downstairs, particularly when a staircase has non-rounded step edges. This inconvenience manifests itself particularly in a great force needed for carrying the known device upstairs/downstairs, particularly when a staircase has non-rounded step edges, as well as in the great non-uniformity of said force.

The cause of the great force being applied, which is necessary for carrying the known device upstairs/downstairs, particularly when a staircase has non-rounded step edges, consists in a great rolling resistance resulting when a step edge, particularly a non-rounded one, comes between the wheels, as well as a position being spontaneously occupied by the suitcase container and additional wheel plane, which position having a great tilt angle relative to the horizontal under the action of set of forces affecting the suitcase. Moreover, the cause of the great non-uniformity of that force consists in great fluctuations of the rolling resistance and great fluctuations of the container tilt angle relative to the horizontal surface.

### SUMMARY OF INVENTION

The task to which solving is directed the claimed invention consists in increasing the convenience of carrying a hand luggage upstairs/downstairs, particularly when a staircase has non-rounded step edges.

The technical result that could be obtained as a consequence of the claimed invention use consists in reducing a force, as well as in reducing the non-uniformity of the force which is necessary to be applied for carrying a hand luggage upstairs/downstairs, particularly when a staircase has non-rounded step edges, as well as, specifically, in reducing the resistance resulting therefrom.

The technical result is achieved by means of using a device for carrying in a tilt position a hand luggage by means of applying a force thereto, which force moving and supporting in that position the hand luggage including a container, main and additional wheels mounted on axles, a means for fastening the axles to the container, and at least one handle having at least one handhold and configured for altering, relative to the horizontal, a container tilt angle value and for altering, relative to the container, a position of the force application in the direction opposite to the direction of altering the container tilt angle relative to the main wheels, wherein at least one handle being configured for fixing said position, and wherein the additional wheels being placed in such a way, that the ratio of the distance between the geometrical axes of the additional wheels nearest longitudinally each other to the diameter of the additional wheels being selected within the range of 0.2 to 0.56.

The technical result is also achieved by means of that the ratio of the distance between the geometrical axes of the main wheels and outermost additional wheels nearest longitudinally to the main wheels to the diameter of the main wheels being selected within the range of 0.2 to 0.48.

The technical result is also achieved by means of that the additional wheels being made so as the ratio of the diameter of the additional wheels to the diameter of the main wheels being selected within the range of 0.1 to 0.75.

The technical result is also achieved by means of that the additional wheels being mounted in rows which number being selected within the range of 3 to 24.

The technical result is also achieved by means of that the handle being attached to the container by means of an axle rotatably relative to the container and provided with a lock.

The technical result is also achieved by means of that the handle being provided with at least one additional handhold.

The technical result is also achieved by means of that handle being made composite from at least two elements coupled by an axle, configured for turning thereof relative to the container and each other, and provided with an additional lock.

The technical result is also achieved by means of that the handle being made telescopic.

The technical result is also achieved by means of that the handle being made telescopic and mounted at an angle to the plane of the additional wheels.

The technical result is also achieved by means of that the handle being made from elements coupled at an angle, and being provided with an additional handhold.

The technical result is also achieved by means of that the device being provided with an additional telescopic handle having a handhold.

The technical result is also achieved by means of that the handle including: telescopic elements mounted parallel to the plane of the additional wheels; at least one additional element mounted at an angle to the plane of the additional wheels and coupled to at least one of the elements mounted parallel to the plane of the additional wheels; and an additional handle.

The technical result is also achieved by means of that the elements mounted at an angle to the plane of the additional wheels being made telescopic.

The technical result is also achieved by means of that the device being provided with an additional handle configured for turning and fixing a position relative to the container.

Attempts for solving the problem of increasing the convenience of trundling a weight via obstacles in the form of staircases are known from the technical solutions relating to hand trucks (see RU 2095266, Int.Cl. B62B 5/02, 10.11.1997, and US 5.833.249, Int.Cl. B62B 5/02, 11.10.1998). In these hand trucks, the additional wheels are offset relative to each other (see RU 2095266) and relative to the main wheels (see RU 2095266 and US 5.833.249) in the transverse direction. In the proposed device for carrying, particularly in a tilt position, a hand luggage by means of applying a force thereto, which force moving and supporting in that position the hand luggage, the wheels are also offset relative each other in the transverse direction. However, said hand trucks do not ensure the technical result achieved due to the summation of the technical solutions set forth in the present invention. The impossibility to achieve the technical solution at the level achieved in the present invention concerns the fact that, because of the structure particularities of those hand trucks, the distance between the wheel axes in those hand trucks is greater than in the device in accordance with the present invention. The RU 2095266 teaches that the ratio of the distance between the geometrical axes of the additional wheels to the diameter thereof is 0.6. The US 5.833.249 does not indicate what is that distance. Herewith, the figures explaining the patent specification show the hand truck structure having the ratio 0.628. By reasons of the structure particularities of the hand truck disclosed in that US patent, this ratio cannot be less than 0.6 with the real wheel size. Moreover, the structure of the hand truck handle disclosed in those patents, which does not permit to alter the tilt angle of the container to the horizontal and the position of applying the moving force relative to the container in the direction opposite to the direction of altering the tilt angle of the container, results in that tilt angle of the hand truck when moving upstairs/downstairs will be much greater than the pitch of a staircase (the tangent tilt of the step edges). Consequently, at least in the position where the hand truck is supported by additional wheels only, a force needed for trundling the hand truck upstairs/downstairs will be extremely great (close to or even greater than the weight being carried). So, the summation of the technical solutions known from that US patent does not permit to provide the necessary convenience for trundling a weight upstairs/downstairs and especially to achieve the claimed technical result. Thus, it can believe that said technical solutions do not meet the industrial applicability criterion. This is confirmed specifically by that said hand trucks have not obtained a spread occurrence. It should be also noted that the number of wheels specified in the US 5.833.249 allows for trundling the hand truck along standard staircases having the step height of 150 mm and more with only too great diameter of the main and additional wheels (120 mm and more) unacceptable for the device for carrying a hand luggage (suitcase and travelling bag), since the additional wheels, offset in the transverse direction relative to the main wheels, decrease the container volume or increase the size occupied by the device for carrying a hand luggage (suitcase and travelling bag).

Known are also the carts (US 2.565.237, Int.Cl. B62B 5/02, 08.21.1951) for trundling weights especially upstairs/downstairs. In those carts, the additional wheels are also offset relative to each other and relative to the main wheels in the transverse direction. The US 2.565.237 teaches that the additional wheels are arranged chequerwise, but there are no indications what is the distance between the axes of the additional wheels. From the statement "chequerwise" and explanations in the specification of that invention, it follows that the distance between the geometrical axes of the wheels to the diameter thereof should be greater than 0.5. Herewith, the figures explaining the patent specification depict the cart structure having this ratio equal to 0.625. Moreover, the structure of the cart handle described in those patents, which does not permit to alter the place of applying the moving force relative to the container and alter the tilt angle of the container to the horizontal, results in that the tilt angle of the cart when moving upstairs/downstairs will be much greater than the pitch of a staircase (the tangent tilt of the step edges). Consequently, at least in the position when the hand truck is supported by additional wheels only, a force needed for trundling the hand truck upstairs/downstairs will be extremely great (close to or even greater than the weight being carried). So, the summation of the technical solutions known from that US patent does not permit to provide the necessary convenience for trundling a weight upstairs/downstairs and especially to achieve the claimed technical result. Thus, it can believe that said technical solutions do not meet the industrial applicability criterion. This is confirmed specifically by that said hand trucks have not obtained a spread occurrence.

Also known are the carriages (DE 4231210, Int.Cl. B62B 5/02, 03.24.1994, and FR 2573359, Int.Cl. B62B 5/02, 05.23.1986) designed for solving another problem, namely for moving along the uneven (corrugated) roofs. Moreover, the wheel arrangements mentioned in those patents, unlike the present invention, do not permit to provide the ratio of the distance between the geometrical axes of the wheels to the diameter thereof, which ratio being selected within the range indicated in the present invention. Specifically, in the carriage shown in figures explaining the specification of the FR 2573359, the ratio of the distance between the geometrical axes of the wheels to the diameter thereof is equal to 0.875. Moreover, the structure of carriage handle disclosed in those patents, which does not permit to alter the place of applying the moving force relative to the container and alter the tilt angle of the container to the horizontal, results in that the tilt angle of the carriage when moving upstairs/downstairs will be much greater than the pitch of a staircase (the tangent tilt of the step edges). Consequently, a force needed for trundling the carriage upstairs/downstairs will be extremely great (close to or even greater than the weight being carried). So, the summation of the technical solutions known from those patents does not permit to provide the convenience for trundling a weight upstairs/downstairs and especially to achieve the claimed technical result. It should be also noted that the number of wheels specified in those patents allows to trundle the carriage along standard staircases with only too great diameter of the wheels (not less than 120 to 180 mm) unacceptable for the device for carrying a hand luggage (suitcase and travelling bag), since the additional wheels, offset in the transverse direction relative to the main wheels, decrease inadmissibly the container volume or increase the size occupied by the suitcase.

It should also noted that although the devices for carrying a hand luggage (suitcases and travelling bags of the Int.Cl. A45C 5/00) are employed for carrying the weight just as the trucks/carriages (Int.Cl. B62B 5/02), but the complex of requirements demanded to the suitcases and trucks differs essentially. Particularly, the suitcases and travelling bags when transporting in various forms of transport should be settled in various spaces (stacks, shelves, etc.). Therefore, a rather strict requirement is specified to the suitcases and travelling bags so that the overall volume differs little from the usable volume. There are no requirements that those volumes be close for the trucks. Therefore, in the devices for carrying a hand luggage (suitcases and travelling bags), small-sized wheels (mainly 30 to 80 mm, and in practice never greater than 120 mm) are forcedly used, and in the trucks, on the contrary, wheels of comparatively great diameter (up to 500 mm) are typically used. It is necessary, for relatively convenient trundling upstairs/downstairs, that the radius of the truck main wheels is approximately 2 times larger than the step height. The standard staircase steps have typically the height of 150 to 200 mm. These sizes correlate with the foot size of medium-sized person. It is obvious that, in order for relatively convenient trundling upstairs/downstairs, it is sufficient that the wheel diameter of the truck is within the range of 300 to 400 mm. In this case, the trucks need no the additional wheels for trundling thereof upstairs/downstairs. A completely different type of situation occurs in the case of the devices for carrying a hand luggage (suitcases and bags), since the diameter of main and especially additional wheels thereof must be less than the height of the staircase steps. Moreover, the requirements to the technical solutions being demanded to the devices for carrying a hand luggage (suitcases and bags of Int.Cl. A45C 5/00, A45C 5/14) and to the trucks/carriages (Int.Cl. B62B5/02) differ in that the devices for carrying a hand luggage are moved by applying a force with one hand, and the trucks are moved with two hands. Accordingly, substantially greater forces are allowable for moving the trucks. Moreover, the devices for carrying a hand luggage (suitcases and travelling bags) are often used, unlike the trucks, in the public transport and places of many people. In this connection, the requirement for occupying the minimal space, especially when moving along the smooth surface, is made thereto. Thus, the complex of requirements to the devices for carrying a hand luggage (suitcases, bags) and to the trucks differs essentially. Therefore, the summations of technical solutions admissible for the trucks and devices for carrying a hand luggage differ also essentially.

The Applicants have performed the tests of the devices for carrying a hand luggage made in the form of a suitcase having the unchangeable position of the moving force relative to the main wheels, as well as having the changeable but non-fixed position of that force. The variant of this device having the unchangeable position of the moving force relative to the main wheels is similar on the principle of operation to the structures of said trucks. And the variant having the changeable but non-fixed position of that force is similar on the principle of operation to the closest analogue of the present invention. These tests show that, at the value of the ratio of the distance between the geometrical axes of the additional wheels to the diameter thereof equal to 0.6, the force being applied to the handle handhold depending on the step corner radius could exceed the 100 to 125 % of the suitcase weight. This confirms that said trucks and the closest analogue do not ensure the convenience needed for carrying the hand luggage upstairs/downstairs.

### BRIEF DESCRIPTION OF DRAWINGS

The claimed invention is explained diagrammatically by the following drawings, where:
Fig. 1 depicts the general side view of the device for carrying a hand luggage made in the form of a suitcase when trundling along a smooth surface;
Fig. 2 depicts the general side view of the suitcase when trundling upstairs/downstairs;
Fig. 3 and 4 as well as Fig. 7 to 9 (view A), and Fig. 5 (cross section *a*-*a*) and Fig. 6 (cross section *b-b*) depict special cases of performing the main and additional wheels, as well as the means for fastening axles to the container;
Fig. 10, 11, and 13 depict the diagrammatic images of the geometrical particularities in the position of the additional and main wheels at the step edge;
Fig. 12 and 14 show the dependencies of the angle between the tangent to the wheel and the vertical side of the step on the ratios of the distance between the geometrical axes of the wheels and the corner radius of the step edge to the diameter of the wheels; and
Fig. 15 to 26 show the particular cases of the suitcase handle implementations.

### DESCRIPTION OF EMBODIMENTS

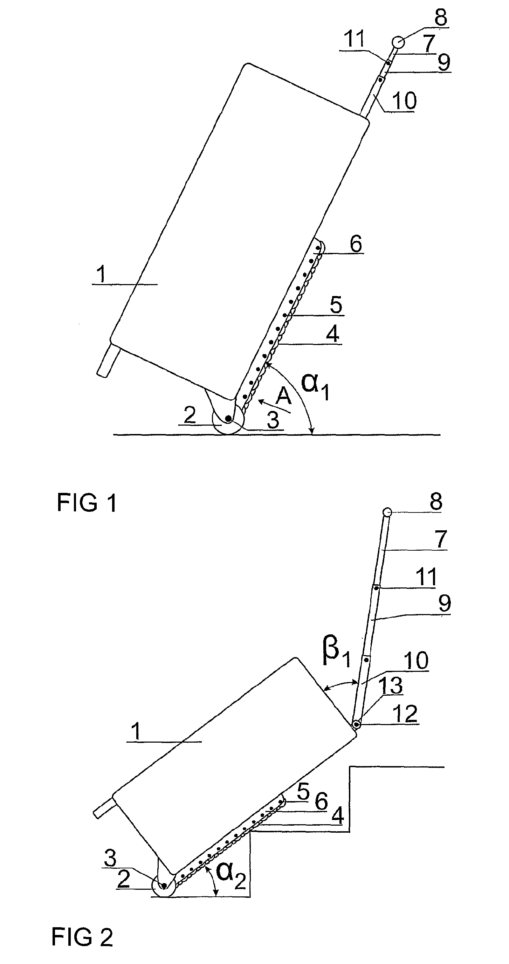

The suitcase (Fig. 1) includes a container 1, main wheels 2 mounted rotatably on axles 3, and additional wheels 4 mounted rotatably on axles 5, a means 6 for fastening the axles 3 and 5 to the container 1, as well as a handle 7 having a handhold 8. The handle 7 includes telescopic elements 9, 10 and locks 11 ensuring the possibility of altering the length of the handle 7. In such a position, an angle between the container longitudinal axis and the horizon makes the angle α₁.

The handle 7 (Fig. 2) includes an axle 12 ensuring a possibility for turning the handle 7 relative to the container 1. When turning the handle 7 relative to the container 1 at an angle β₁, the angle between the container 1 and the horizon is α₂. The handle 7 includes a lock 13 that ensures fixing the position of the handle 7 relative to the container 1 in at least two rotation angles.

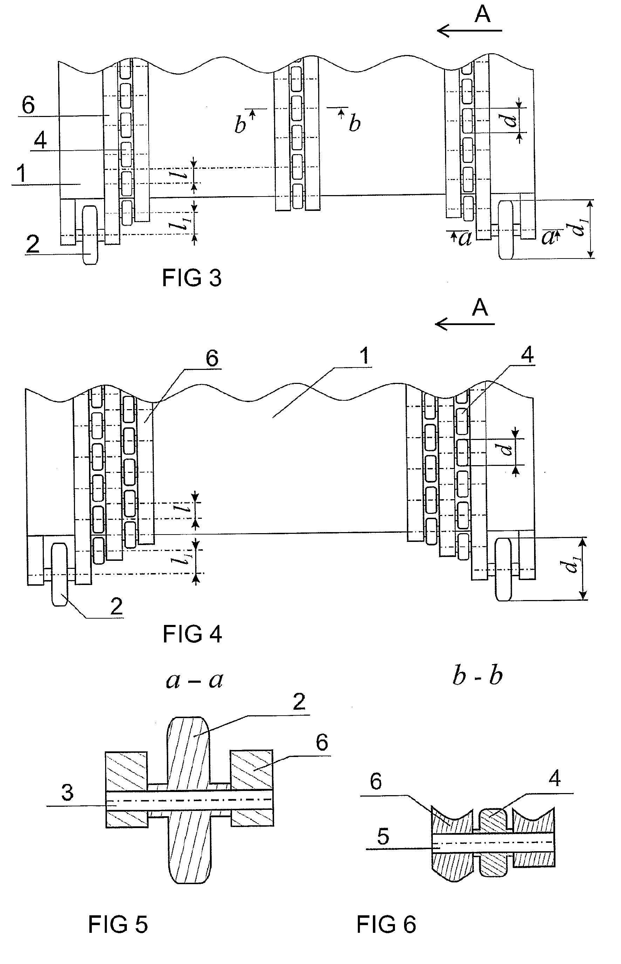

The additional wheels 4 could be mounted in a variety of ways. Particularly, these wheels could be mounted so that they form longitudinal rows, and the number of the rows could be various, for example, 3 rows (Fig. 3), or 4 rows (Fig. 4), the geometrical axes of the additional wheels 4 of each row arranging between the geometrical axes of the additional wheels 4 of the adjacent nearest row. In this case, the ratio k of the distance / between the geometrical axes of the additional wheels disposed in the adjacent rows to the diameter d thereof could be a value selected from the range of 0.51 to 0.56.

The main wheels 2 (Fig. 5) are mounted rotatably on the axles 3 fastened in the means 6, and the additional wheels 4 (Fig. 6) are mounted rotatably on the axles 5 fastened in the means 6.

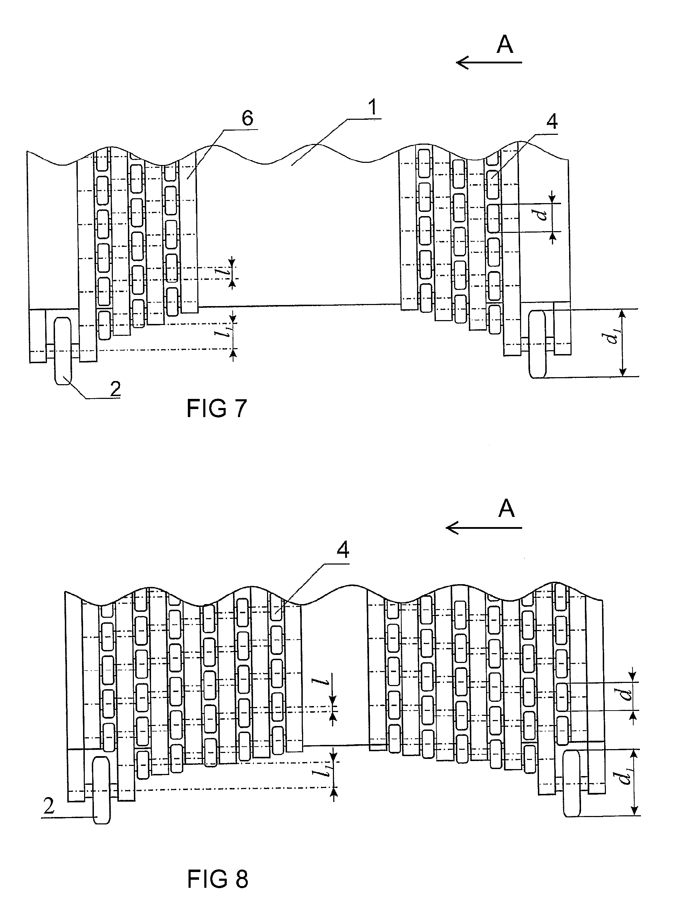

The additional wheels 4 (Fig. 7) form six rows. In this case, the ratio k of the distance / between the geometrical axles of the additional wheels 4 disposed in the adjacent rows to the diameter d thereof in the symmetric arrangement could be of 0.34 to 0.56.

The additional wheels 4 (Fig. 8) form twelve rows. In this case, the ratio k of the distance / between the geometrical axles of the additional wheels 4 disposed in the adjacent rows to the diameter d thereof in the symmetric arrangement could be of 0.2 to 0.56.

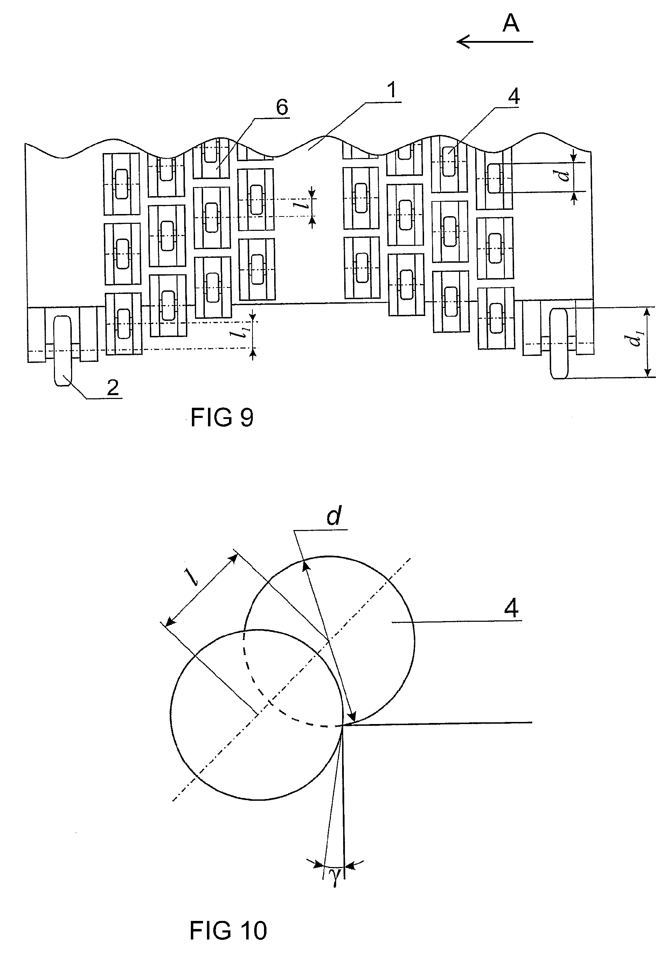

Each additional wheel 4 (Fig. 9) could have its own means 6 for fastening to the container 1. In this case, in order for convenient mounting the means 6 to the container 1 with obtaining said ratios k = *l*/*d,* the number of rows of the additional wheels 4 is two times greater in comparison with said particular suitcase embodiments, where the means 6 is used for fastening the groups of axles 5 to the container 1 (Fig. 3 to 8).

If the number of rows of the additional wheels 4 is less than 12 or 24 (respectively, when fastening the axles 5 in group or individually), the ratio k of the distance / between the geometric axes of the additional wheels 4 to the diameter d thereof could fall within the range of 0.21 to 0.56. Thus, when the number of rows of the additional wheels 4 is from 12 or from 24 to 3 or 6 (respectively, when fastening the axles 5 in group or individually), the ratio k of the distance / between the geometric axes of the additional wheels 4 disposed in adjacent rows to the diameter d thereof could fall within the range of 0.2 to 0.56.

In the preferred embodiment of the suitcase, the ratio k of the distance / between the geometric axes of the additional wheels 4 disposed in adjacent rows to the diameter d thereof could fall within the range of 0.26 to 0.47.

The angle γ between the tangent to the wheel surface and the vertical plane in the point where the wheel surface contacts the non-rounded step edge depends on the tilt angle of the suitcase and the value of said ratio k.

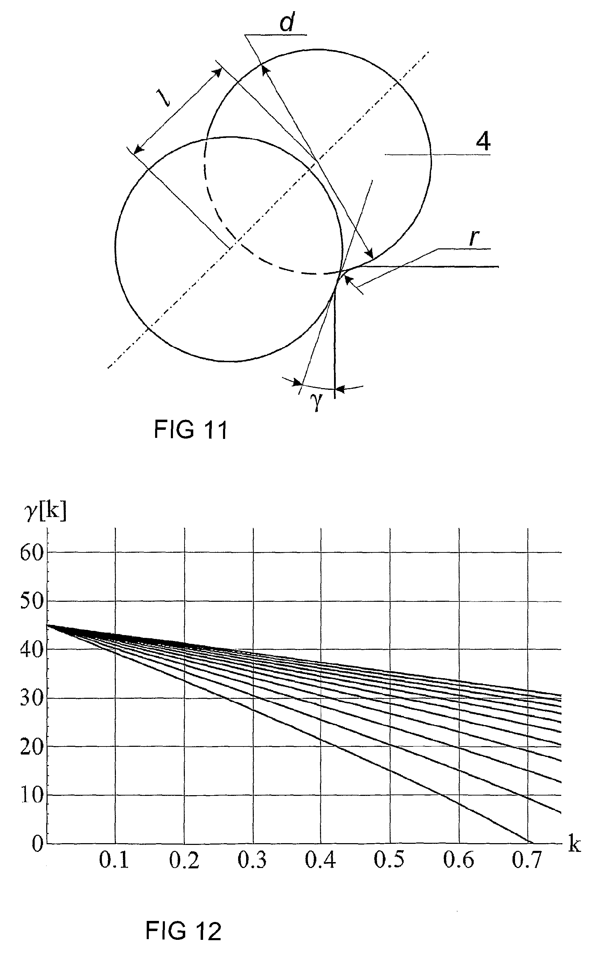

Fig. 12 shows the dependencies of the angle γ (Fig. 10 to 11) between the tangent to the wheel 4 and the vertical side of the step on said ratio k and the ratio k₁ of the corner radius *r* of the step edge to the diameter of the wheel 4. Herewith, the lower curve corresponds with the value k₁ = 0, the upper curve corresponds with the value k₁ = 1, and the intermediate curves correspond with the intermediate values k₁ in increments of 0.1.

In the case of non-rounded step edge, when the tilt angle of the suitcase container (the plane passing through the geometric axes of the wheels 4) to the horizontal being equal to 45° (Fig. 10), and when the value of said ratio k being selected in the range of 0.2 to 0.56, the angle γ between the tangent to the wheel 4 and the vertical side of the step is approximately from 35° to 12° respectively (Fig. 12). When the corner radius *r* of the step edge being equal to 0.4 of the diameter d of the additional wheel 4, and when said conditions (Fig. 11) being fulfilled, the angle γ is approximately from 39° to 27°. When the ratio k = *l*/*d* and the corner radius *r* of the step edge having the intermediate values, the angle γ varies within the range of 39° to 12° (Fig. 12).

In the preferred embodiment of the suitcase, when the values of the ratio k = *l*/*d* being selected from the range of 0.26 to 0.47 and the values of the corner radius *r* of the step edge being from 0 to 0.4*d*, the angle γ is more than 30°.

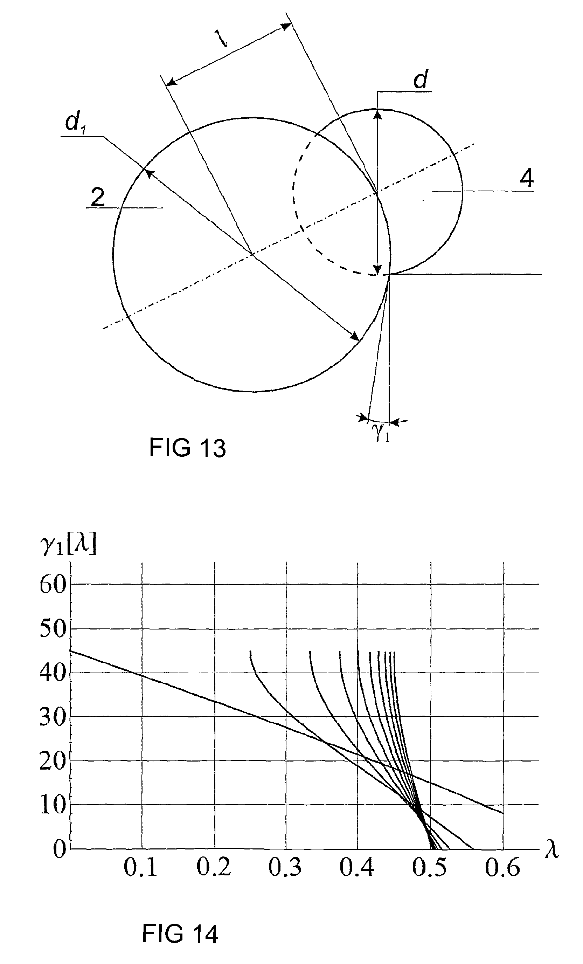

Fig. 14 depicts the dependencies of the angle γ₁ between the tangent to the wheel

2 and the vertical side of the step on the ratio λ of the distance *l₁* between the geometric axes of the main wheels 2 and the additional wheels 4 proximate thereto to the diameter *d₁* of the main wheels 2, when the ratio k₂ of the diameter *d₁* of the main wheels to the diameter d of the additional wheels 4 varying from 1 to 10 in increments of 1. Herewith, the most flattened curve corresponds with the value k₂ = 1, and the most rapid curve corresponds with the value k₂ = 10. The ratio of the diameters *d*/*d₁* of the additional wheels 4 and the main wheels 2 should be selected from the range of 0.1 to 0.75. Herewith, the ratio λ of the distance *l₁* (Fig. 3, 4) between the geometric axes of the main wheels 2 and the geometric axes of the proximate utmost additional wheels 4 to the diameter *d₁* of the main wheels 2 should be selected from the range of 0.2 to 0.48. In this case, the angle γ₁ (Fig. 13) between the tangent to the surface of the wheel 2 and the vertical plane in the point of the contact thereof with the step edge falls within the same range as the angle γ (Fig. 14). In the preferred embodiment of the suitcase, the ratio of the diameters *d*/*d₁* of the additional wheels 4 and the main wheels 2 should be selected from the range of 0.15 to 0.3, the main and additional wheels arranging so that said ratio λ is the value selected from the range of 0.28 to 0.44. In this case, the angle γ₁ is greater than 30°.

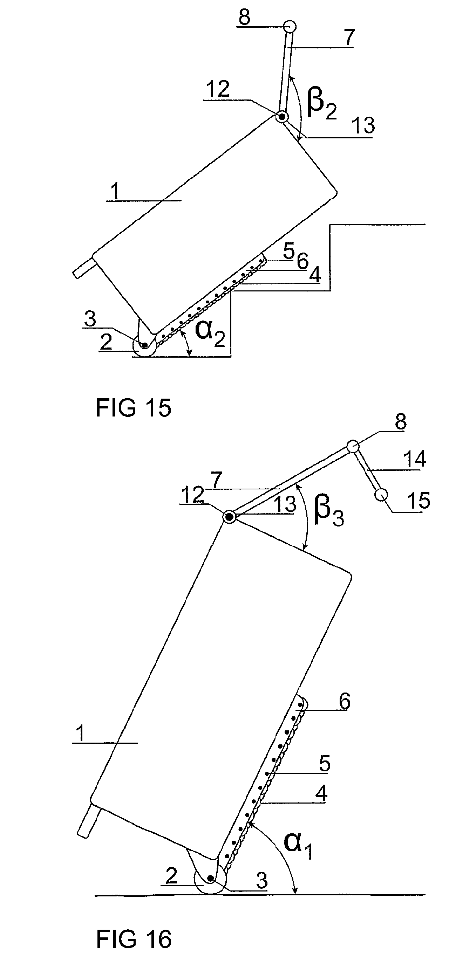

The handle 7 with the handhold 8 (Fig. 15) includes an axle 12 ensuring a possibility for turning the handle 7 relative to the container 1. When turning the handle 7 relative to the container 1 through the angle β₂, the angle between the container 1 and the horizontal is α₂. The handle 7 includes a lock 13 that ensures fixing the position of the handle 7 relative to the container 1 in at least two rotation angles.

The handle 7 with the handhold 8 (Fig. 15) includes an axle 12 ensuring a possibility for turning the handle 7 relative to the container 1. The handle 7 includes a lock 13 that ensures fixing the position of the handle 7 relative to the container 1 in at least two rotation angles. The handle 7 comprises an element 14 fastened at an angle thereto, and an additional handhold 15 fastened to the element 14. When turning the handle 7 relative to the container 1 through the angle β₃, the angle between the container 1 and the horizontal is α₁.

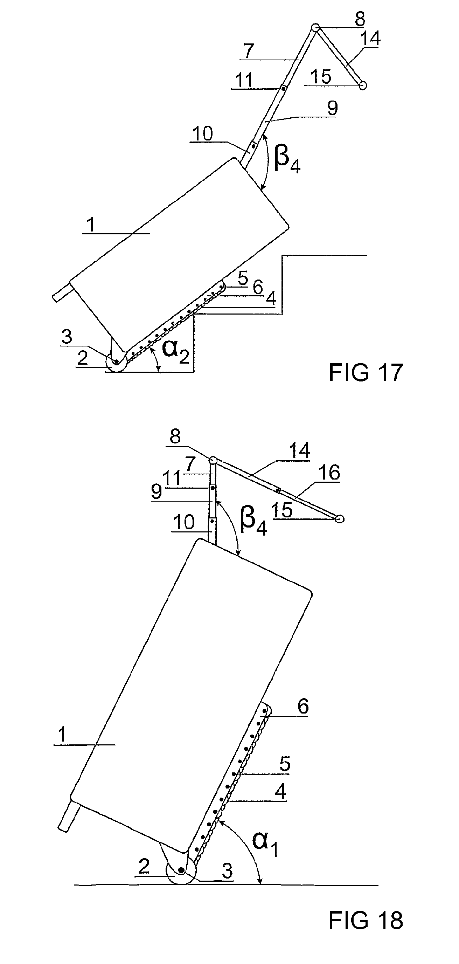

The handle 7 (Fig. 17) with the handhold 8 comprises telescopic elements 9, 10 and locks 11 ensuring a possibility for altering the length thereof. The handle 7 is fastened relative to the container 1 at an angle β₄, which results in that the container 1 is disposed at an angle α₂ to the horizon, when the handhold 8 being kept by hand. The handle 7 comprises an element 14 fastened at an angle thereto, and an additional handhold 15 fastened to the element 14.

The handle 7 (Fig. 17) with the handhold 8 comprises telescopic elements 9, 10 and locks 11 ensuring a possibility for altering the length thereof. The handle 7 comprises an element 14 fastened at an angle to the element 10, an element 16 mounted telescopically in the element 14, and an additional handhold 15 fastened to the element 16. When the handhold 15 being kept by hand, the container 1 is disposed at the angle α₁ to the horizon, with an angle β₄ between the handle 7 and container 1.

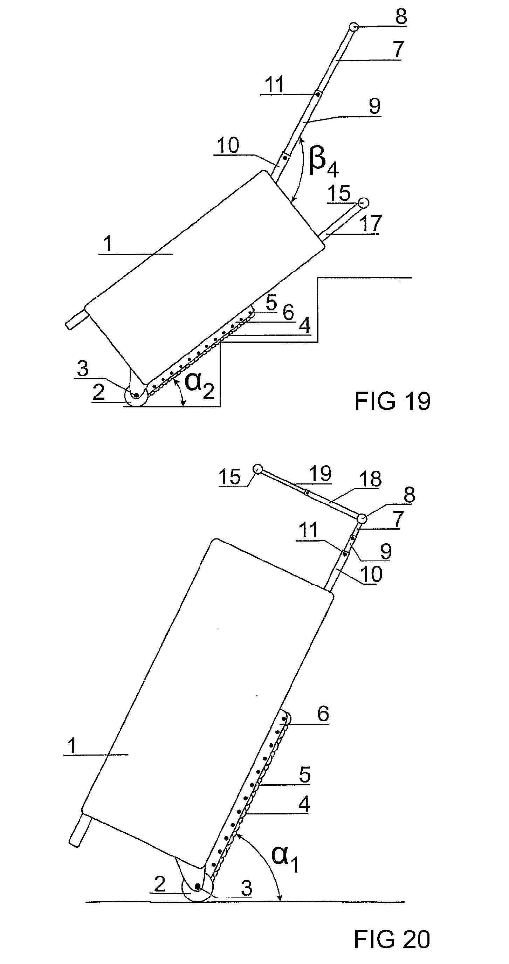

The handle 7 (Fig. 19) is fastened relative to the container 1 at an angle β₄, which results in that the container 1 is disposed at an angle α₂ to the horizon, when the suitcase being kept by hand at the handhold 8. The suitcase comprises an additional telescopic handle 17 having an additional handhold 15 and mounted along the side of the container 1 with the wheels 4. If the suitcase is kept by hand at the additional handhold 15, the angle between the container 1 and the horizon is equal to α₁.

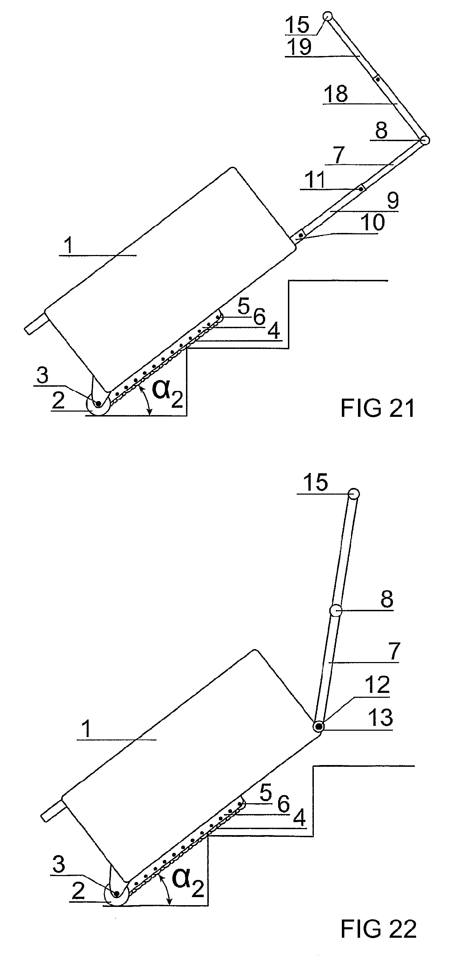

The handle 7 (Fig. 20, 21) is fastened along the side of the container 1 with the wheels 4. The handle 7 with the handhold 8 includes telescopic elements 9, 10 and locks 11, ensuring a possibility for altering the length thereof, The handle comprises also an element 18 fastened at an angle to the handle 7, an element 19 mounted telescopically within the element 18, and an additional handhold 15 fastened to the element 19. If the handhold 8 is kept by hand (Fig. 20), the angle between the container 1 and the horizontal is equal to α₁, and if the handhold 15 is kept by hand (Fig. 21), the angle between the container 1 and the horizontal is equal to α₂.

The handle 7 (Fig. 22) is coupled with the container 1 rotatably via an axle 12 and provided with a lock 13, the handhold 8, and an additional handhold 15.

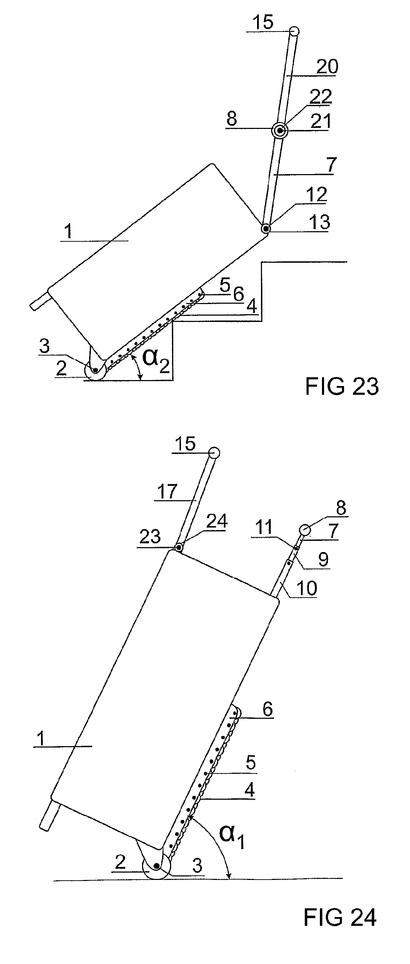

The handle 7 (Fig. 23) is coupled rotatably with the container 1 via an axle 12 and comprises an element 20 coupled rotatably with the handle 7 via an axle 21. The handle 7 is provided with a lock 13 and lock 22, configured for setting the position of the handle 7 and element 20 relative to the container 1 and the mutual position thereof relative to each other at various angles. The handle 7 includes an additional handhold 15.

The handle 7 (Fig. 24) with the handhold 8 includes telescopic elements 9, 10 and locks 11 ensuring a possibility for altering the length thereof. In such a position, the angle between the longitudinal axis of the container 1 and the horizon makes an angle α₁. The suitcase comprises an additional handle 17 with a handhold 15. The additional handle 17 is coupled rotatably with the container 1 via an axle 23. The additional handle 17 is provided with a lock 24 configured for setting the position of the additional handle 17 relative to the container 1 at various angles.

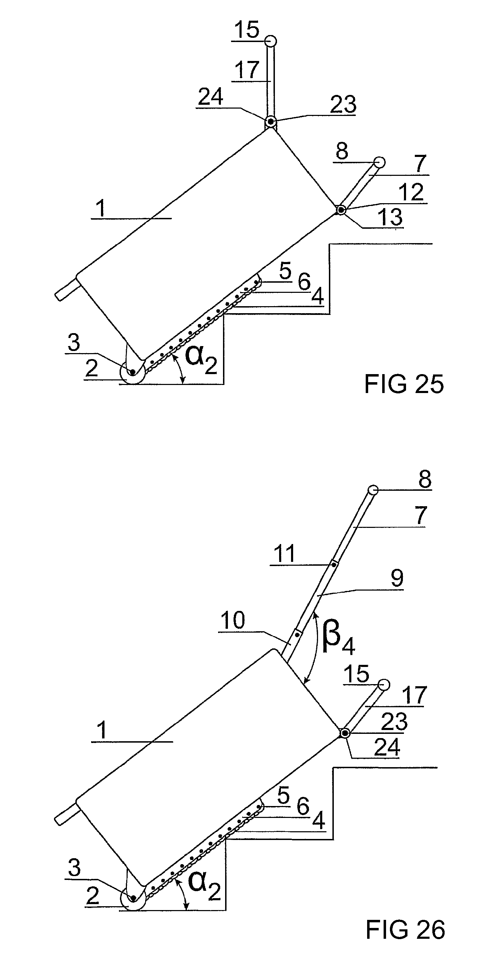

The handle 7 (Fig. 25) with the handhold 8 is coupled rotatably with the container 1 via an axle 12. The handle 7 is provided with a lock 13 configured for setting the position of the handle 7 relative to the container 1 at various angles. The suitcase comprises an additional handle 17 with a handhold 15. The additional handle 17 is coupled rotatably with the container 1 via an axle 23. The additional handle 17 is provided with a lock 24 configured for setting the position of the additional handle 17 relative to the container 1 at various angles. The handle 7 (Fig. 26) is fastened relative to the container 1 at an angle β₄, which results in that the container 1 being disposed at an angle α₂ to the horizontal, if the suitcase is kept by hand at the handhold 8. The suitcase comprises an additional handle 17 with a handhold 15. The additional handle 17 is coupled rotatably with the container 1 via an axle 23. The additional handle 17 is provided with a lock 24 configured for setting the position of the additional handle 17 relative to the container 1 at various angles.

The locks 11, 13, 24 could be made in variety of ways known in the art on the basis of friction, threaded, eccentric, or resilient elements, as well as elements comprising a projection and hollow. Particularly, the locks 11, 13, 24 could be made similar to the locks disclosed in the EP 1462334, Int.Cl. B62B 5/08, 09.29.2994; EP 1493646, Int.Cl. B62B 7/10, 01.05.2005; GB 1176517, Int.Cl. B62B 7/10, 01.07.1970.

The device made in accordance with the present invention is employed as follows.

While carrying a hand luggage over an even surface in the device made in the form of the suitcase (Fig. 1), the suitcase is supported by the main wheels 2 that are coupled with the container 1 via the axles 3 and the means 6. In so doing, the suitcase is supported and operated by means of the handhold 8 and handle 7, the length of the handle 7 could be altered with the telescopic elements 9, 10 and locks 11 for the user's convenience. The handle 7 is configured so that, at maximal extension thereof, the suitcase is disposed at the angle α₁ to the horizontal surface. Typically, for persons carrying a hand luggage and having various statures, this angle is within the range of 45° to 65°. Herewith, the most part of the suitcase weight falls onto the main wheels 2, and the less part of the suitcase weight falls onto the handhold 8. Thus, the suitcase is carried, while overcoming obstacles with one or two bulges, by a person holding the suitcase on the handhold 8 in particular embodiments represented in Figs. 15, and 29 to 25. In particular embodiments of the handle 7 represented in Figs. 16 to 19, and 26, the suitcase is carried over an even surface or while overcoming obstacles with one or two bulges by a person holding the suitcase at the additional handle 15. The suitcase is convenient for carrying in such position, when many people moves around, since the suitcase occupies a small space near a person employing thereof. As the tests show, the force needed for holding and trundling the suitcase in such position does not usually exceed 40 % of the weight thereof. In this position, the suitcase could overcome obstacles with one or two bulges, e.g. edge stones, resting thereupon with the additional wheels 4. In this case, the force needed for trundling the suitcase, e.g., onto a step or edge stone could be up to 90-100 % of the suitcase weight, as is shown in the tests of the suitcase having the ratios *l*/*d* and *l₁*/*d₁* selected from the proposed ranges (0.2 to 0.56 and 0.2 to 0.48). Such a force is too great in a long carrying; therefore it is not convenient to carry the suitcase in such position for overcoming stairs having a great number of steps. At the same time, such trundling the suitcase upstairs is more convenient than lifting and carrying thereof. When increasing the ratio *l*/*d* up to 0.6 and more, the force needed for trundling the suitcase onto the step or edge stone in such a position becomes greater than 100 % of the weight thereof. In such case, the degree of inconvenience for overcoming obstacles with bulges, e.g., for trundling the suitcase onto a step or edge stone becomes comparable to the degree of inconvenience for lifting and carrying the suitcase. In overcoming obstacles with bulges, e.g., in trundling the suitcase upstairs, the tilt angle of the suitcase is decreased to the value α₂ in order for decreasing the force needed for carrying the suitcase. In the case of configuring the handle 7 rotatable (Fig. 2), decreasing the tilt angle of the suitcase to the value α₂ is performed by altering the angle between the container 1 and handle 7 to the value β₁. In the cases of implementing the suitcase as represented in Figs. 17 to 19, decreasing the tilt angle of the suitcase is performed by pulling out the handle 7 and holding the suitcase at the handhold 8. After decreasing the tilt angle of the suitcase to the horizontal, the position of the handhold for holding the suitcase is fixed using the locks 11, 13. By virtue of this, the suitcase maintains the decreased tilt angle α₂ when trundling on the staircase steps. After decreasing the tilt angle of the suitcase to the horizontal, the suitcase is supported by the staircase steps with the main wheels 2 and additional wheels 4 (Figs. 2, 15, 17, 19, 21 to 23, 25, and 26). When carrying the suitcase upstairs, it is disposed somewhat behind a person, and when carrying the suitcase downstairs, it is disposed in front of a person. In the most part of cases, the line connecting edges of adjacent staircase steps is tilted less than 35° with respect to the horizontal. Respectively, the nearer the tilt angle of the suitcase to the tilt angle of the staircase, the less is the force needed for trundling the suitcase. By virtue of such disposal of the suitcase (Figs. 2, 15, 17, 19, 21 to 23, 25, and 26) at the angle α₂ to the horizontal, the force needed for holding the suitcase on the staircase becomes 1.5 to 2 times less in comparison with the position at the angle α₁ (Figs. 1, 16, 18, 20, and 24).

In carrying the suitcase over an obstacle, particularly upstairs/downstairs, a force affects the handhold depending on the suitcase weight, pitch of the staircase, and tilt angle of the suitcase, as well as the resistance emerged in the wheels 2 and 4. The resistance emerged in the wheels 2 and 4 depends on the roundness degree of the obstacle, particularly the edges of the staircase steps, and the distance between the axes of the wheels 2 and 4. In order for decreasing this resistance, it is necessary to make the angles γ, γ*₁* (Figs. 11 to 14) as big as possible. When increasing the radius *r* of the step roundness and decreasing the ratio *l*/*d,* the angles γ, γ*₁* tend to 45°. The most widespread are staircases having the radius *r* of the edge step roundness close to 0; sufficiently often exist staircases having the radius *r* up to 5-10 mm; and very seldom exist staircases having significantly greater radii *r* of roundness. The diameter d of the additional wheels 4, taking into account the suitcase weight and some structural and technological factors, could vary within the range from 10 to 30 mm. In view of said *r* and d ranges, it can believe that the angle γ falls within the range from 15 to 35° when selecting the ratio *l*/*d* from the range of 0.2 to 0.56. At the same time, when increasing the value of *l*/*d* up to 0.6 and more, the angle γ becomes less than 8°. The tests show that, for the suitcase disposed at the decreased tilt angle α₂ to the horizon (Fig. 2) and having the values of the ratio *l*/*d* selected from the range of 0.2 to 0.56, the force needed for trundling the suitcase upstairs/downstairs is from 56 to 80 % of the weight thereof depending on the staircase sleep and radius *r* of the step roundness. In trundling the suitcase upstairs/downstairs, this ensures well acceptable level of convenience even for people not being very strong. At the same time, when increasing the value of the ratio *l*/*d* up to 0.6 and more, the force needed for trundling the suitcase upstairs/downstairs increases up to 90-100 % of the suitcase weight and more, which makes the process of trundling the suitcase upstairs/downstairs inconvenient, since such a force have a rather prolonged character.

## Claims

1. A device for carrying in a tilt position a hand luggage by means of applying a force thereto, which force moving and supporting in that position the hand luggage comprising a container, main and additional wheels mounted on axles, a means for fastening the axles to the container, and at least one handle having at least one handhold and configured for altering, relative to the horizontal, a container tilt angle value and for altering, relative to the container, a position of a force application in a direction opposite to the direction of altering the container tilt angle relative to the main wheels, **characterised in that** at least one handle being configured for fixing said position and the additional wheels being placed in such a way, that a ratio of a distance between geometrical axes of the additional wheels nearest longitudinally each other to the diameter of the additional wheels being selected within the range of 0.2 to 0.56.

2. The device according to claim 1, **characterised in that** a ratio of a distance between geometrical axes of the main wheels and outermost additional wheels nearest longitudinally to the main wheels to a diameter of the main wheels being selected within the range of 0.2 to 0.48.

3. The device according to claim 2, **characterised in that** the additional wheels being made so as the ratio of the diameter of the additional wheels to the diameter of the main wheels being selected within the range of 0.1 to 0.75.

4. The device according to claim 1, **characterised in that** the additional wheels being mounted in rows which number being selected within the range of 3 to 24.

5. The device according to claim 1, **characterised in that** the handle being attached to the container by means of the axle rotatably relative to the container and provided with a lock.

6. The device according to claim 5, **characterised in that** the handle being provided with at least one additional handhold.

7. The device according to claim 5, **characterised in that** the handle being attached to the container by means of an axle rotatably relative to the container and provided with a lock.

8. The device according to claim 5, **characterised in that** the handle being made telescopic.

9. The device according to claim 1, **characterised in that** the handle being made telescopic and mounted at an angle to a plane of the additional wheels.

10. The device according to claim 9, **characterised in that** the handle being made from elements coupled at an angle and being provided with an additional handhold.

11. The device according to claim 9, **characterised in that** the device being provided with an additional telescopic handle having a handhold.

12. The device according to claim 1, **characterised in that** the handle comprising: telescopic elements mounted parallel to a plane of the additional wheels; at least one additional element mounted at an angle to the plane of the additional wheels and coupled to at least one of elements mounted parallel to the plane of the additional wheels; and an additional handle.

13. The device according to claim 12, **characterised in that** the elements mounted at an angle to the plane of the additional wheels being made telescopic.

14. The device according to any of claims 5, 9, or 12, **characterised in that** the device being provided with an additional handle configured for turning and fixing a position relative to the container.
